Europäisches Patentamt

European Patent Office

Office européen des brevets

(11) Publication number: **0 137 673**
**A1**

## (12) EUROPEAN PATENT APPLICATION

(21) Application number: **84305732.4**

(22) Date of filing: **22.08.84**

(51) Int. Cl.⁴: **G 01 D 5/12**
**G 01 P 13/00**

(30) Priority: **31.08.83 GB 8323353**

(43) Date of publication of application:
**17.04.85 Bulletin 85/16**

(84) Designated Contracting States:
**DE FR NL SE**

(71) Applicant: **HIBASS PHOTOMEC LIMITED**
**Denington Industrial Estate**
**Wellingborough Northamptonshire(GB)**

(72) Inventor: **Simmons, Robin, Dr.**
**Newland Lodge**
**Walgrave Northampton(GB)**

(72) Inventor: **Swindall, Greg**
**43 The Banks Redhill Grante**
**Wellingborough Northamptonshire(GB)**

(74) Representative: **Goodenough, Nigel et al,**
**A.A. Thornton & Co. Northumberland House 303-306**
**High Holborn**
**London WC1V 7LE(GB)**

(54) Motion sensor.

(57) A motion sensor comprises an electrically conductive element (10) moving (e.g. rotating) with the moving part to be monitored and having its surface in sliding contact with at least one brush (12), an electrical potential being applied to the brush (12) and a signal processing circuit (A1-OS) being provided to respond to variations in the consequential current flow, which variations depend upon variations in the speed of movement of the conductive element (10). The output stage (OS) of the signal processing circuit may be arranged to provide a signal indicating whether the speed of movement is above or below a predetermined value. The motion sensor may be incorporated in a stopping performance monitor which serves to monitor the time taken by a machine to slow to a predetermined speed after a stop-command signal is given.

FIG.1

- 1 -

MOTION SENSOR

This invention relates to a motion sensor, useful for example in a stopping-performance monitor for checking the stopping performance of an industrial machine (i.e. the time taken for the machine to come to rest or to a speed below a threshold value, measured from the instant a command signal is applied to initiate stopping of the machine). A monitor having a motion sensor in accordance with this invention may be used for a wide range of industrial machines, whilst the motion sensor itself may be employed in a wide range of other uses.

Stopping-performance monitors of various types are known, and serve to measure the time taken, from the instant of the stop-command signal, for the relevant moving parts of the machine to come to rest or to a speed which is regarded as sufficiently slow to be safe. If movement is detected (or movement above the safe threshold speed) after a predetermined time period appropriate for the machine in question, then the monitor is arranged to provide for fail-safe operation by shutting-down or locking-out the power unit of the machine.

In prior monitors, the transducer arrangements for sensing the speed of movement of the moving parts have been variously complex or lacking in accuracy and reliability. Also, for the purpose of testing the ability of the system to lock-out should there be a genuine fault, it has been necessary with prior monitors to deliberately initiate an artificial fault, requiring the conscious application of a manual test.

In accordance with this invention as seen from one aspect there is provided a motion sensor for sensing movement of a moving part, comprising an electrically conductive element moving with the moving part and having its surface in sliding contact with one or more brushes, means for applying an electrical potential to the brush and means responsive to variations in the consequential current flow, which variations depend upon variations in the speed of movement of the conductive element.

The conductive element may be a stainless steel body and the brushes carbon members resiliently urged against the conductive element. The relative movement of the conductive element and brushes may be linear or rotary, depending upon the movement of the machine parts to be monitored, and the latter case the conductive element may comprise a cylinder against which the brushes are spring loaded.

Because of inevitable imperfections in the relatively sliding surfaces of the conductive element and the brushes, the electrical current (during movement) is modulated. The signal thus produced is, in the embodiment to be described herein, processed and demodulated to sense motion.

Also, in accordance with this invention as seen from a second aspect, there is provided a stopping-performance monitor arranged on power-up to adopt a mode wherein a lock-out will automatically be initiated, and further arranged that if then reset manually it will adopt a normal operating mode.

In the embodiment to be described herein, the monitor has two independent channels with their own motion-sensing inputs, "stop" trigger inputs and lock-out relay outputs. The relay outputs of the two channels are cross-monitored to detect any loss of co-ordination between the channels in failure conditions. The first "stop" signal causes the time counter of each channel deliberately to overrun the preset stopping time, even though the machine most likely will stop within that time period. The monitor will go into lock-out on both channels, and may be reset on each channel by a key-operated switch: the monitor will now behave as a normal stopping performance monitor.

An embodiment of this invention will now be described, by way of example only, with reference to the accompanying drawings, in which:

Figure 1 is a schematic circuit diagram of a motion sensor; and

Figure 2 is a schematic diagram of one of a pair of channels in a stopping-performance monitor which incorporates the motion sensor of Figure 1.

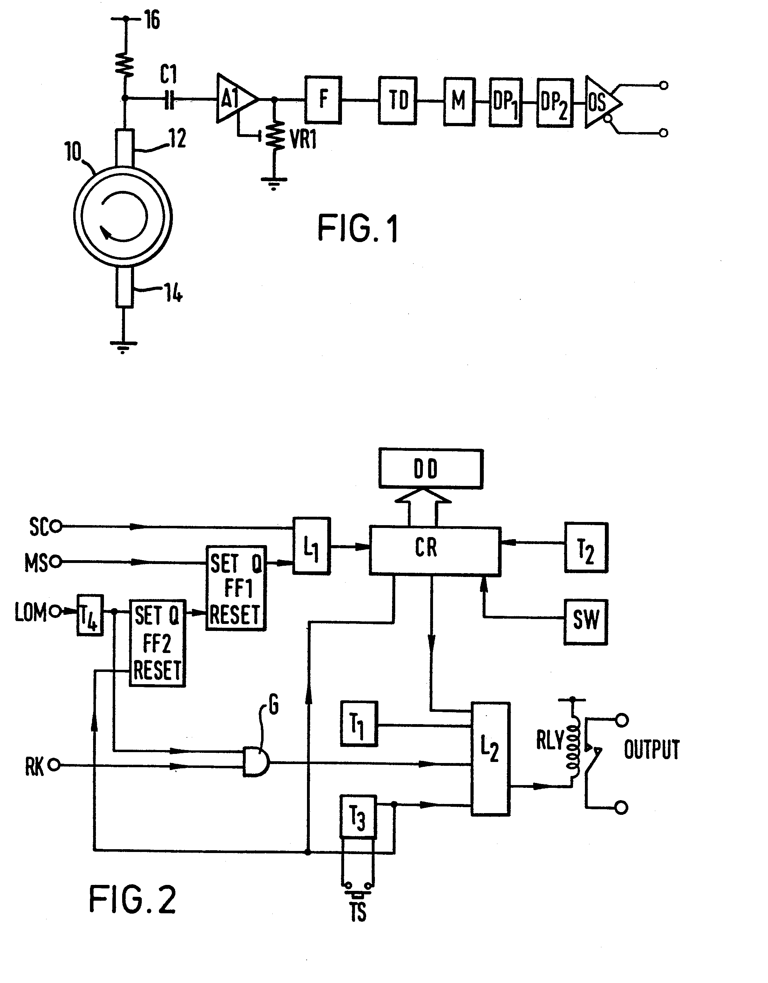

Referring to Figure 1, there is shown a speed-sensing transducer comprising a stainless steel cylinder 10 rotating with a moving part of the machine to be monitored, and two carbon brushes 12,14 spring loaded against the surface of the cylinder 10. A d.c. supply 16 is connected via a resistor to brush 12, brush 14 being connected to ground, such that a small d.c. potential appears between the brush side of the resistor and ground. A signal is taken from brush 12 and applied via a coupling capacitor C1 to an amplifier A1: the amplified signal is passed to a band pass filter F, a threshold detector TD, a monostable multivibrator M, and two diode pumps DP1 and DP2 in succession, and finally to an output stage OS.

When the moving part of the machine (and hence the cylinder 10) is at rest, then a steady d.c. current flows in the current path which includes the brushes and the cylinder, and the amplifier A1 (being a.c.

coupled by the capacitor C1) does not register any response. However, upon rotation of the cylinder 10, imperfections in the interface between the brushes and the cylinder cause irregular modulation of the current to apply an a.c. signal to the amplifier A1. This signal is amplified at A1 and filtered at F, and the threshold detector TD squares any pulses of a sufficient amplitude to exceed the threshold setting. A sensitivity control VR1 is provided for adjusting the gain of amplifier A1 and serves as a coarse selection of the minimum rotational speed to which the sensor will respond.

The pulses issued by the threshold detector are differentiated, and squared at M to suit the first diode pump DP1. This diode pump DP1 serves to provide a signal proportional to the pulse rate: the second diode pump DP2 has a much longer time constant and the overall effect of the two circuits is to render the system relatively insensitive to isolated bursts of pulses, such as may result from vibration and impact. The output stage OS delivers an output signal except when motion has reduced to a negligible speed or has ceased.

The stopping-performance monitor comprises two transducers as shown in Figure 1, coupled to the same moving part of the machine, and supplying their respective output signals to two channels of the monitor, one such channel being shown in Figure 2. These two channels are the same, except that the second channel does not include the visual display shown in Figure 2 as included in the first.

Referring to Figure 2, the channel shown comprises an input SC for a "stop" command signal, an input MS for a signal from the output stage OS of the transducer circuit of Figure 1, which signal is present when motion of the machine moving part is sensed, an input LOM which is connected to the other of the two channels to receive a signal when that other channel is in a lock-out condition, and an input RK actuated by a reset key to reset the channel after a lock-out. Motion sensor input MS is coupled to the SET input of a flip-flop FFI, and stop command input SC and the output of flip-flop FFI are coupled to respective inputs of a latch L1. Lock-out input LOM is coupled to the SET input of a second flip-flop FF2 which has its output connected to the RESET input of flip-flop FF1. Latch L1 is coupled to a counter CR which in the first channel, as shown, drives a digital display DD. SET switches SW serve to preset a time period and if motion is detected beyond this time period, then the counter of this channel provides a lock-out signal to a latch L2 causing de-energisation of a relay RLY.

Suppose the monitor is in normal operating mode after the automatic test on power-up (which will be described) has been satisfactorily carried out. Suppose further that there is as yet no motion of the machine. At this time, flip-flop FF2 is SET and its output high. Any stop command signal will not change the state of latch L1, which state is instead maintained by flip-flop FF1 whose output is low with no motion sensor input from MS and with flip-flop FF2 SET and its output high to the Reset input of FF1. Also, latch L2 is set so that the relay RLY is energised.

When motion is sensed and a signal applied through input MS, flip-flop FF1 is SET and its output goes high. The next stop command signal at SC flips latch L1 and accordingly causes the counter CR to count up. When the signal at input MS terminates, to indicate that motion has ceased, then flip-flop FF1 is RESET and its output goes low to switch the latch L1 and cause the counter CR to stop: the count is displayed at DD and is as a measure of the time that the machine continued in motion after the stop command signal was generated. If the count goes beyond that preset by switches SW, then an output from the counter is applied to the latch L2 to switch this and activate a lock-out of the machine by de-energising the relay RLY.

For power-up, 3 time delay circuits are effective. Time delay T1 holds the latch L2 for say 150ms to keep the relay RLY de-energised for that peirod. Thus in this period the lock-out input LOM of each channel receives a "high" from the relay of the other channel such that flip-flop FF2 is SET and its output high, and flip-flop FF1 is RESET to hold latch L1. A second time delay T2 holds a "load" input of the counter high to set its internal latches to the value set by switches SW. The third time delay T3, which has a longer delay of say 550ms, changes the latch L2 to energise the relay RLY: thus each channel serves to remove the lock-out signal from input LOM of the other channel: moreover, time delay T3 applies its output to the reset input of flip-flop FF2 for RESET so that the output of FF2 goes low to release the reset input on FF1. Furthermore, time delay T3 applies a signal to a "store" input of the counter: the display stores zero and goes blank. The monitor is now ready for its test.

In the test, the machine is run but when a stop command signal is generated, then instead of latch L1 being reset by FF1 when "no-motion" is sensed, FF2 holds FF1 against a reset and the count continues and should overrun the preset count to switch latch L2 and de-energise the relay RLY in each channel. Each channel then applies a lock-out signal to input LOM of the other channel: after a delay imparted by a time delay circuit T4, FF2 is SET to RESET flip-flop FF1 to switch latch L1 and stop the counter. The count now stored is the preset count plus the delay of T4 and is displayed at DD.

Both channels should now be locked out and normal operation can be restored by resetting latch L2 by the reset key which activates input RK through gate G: the logic in both channels is now conditioned for the normal operating mode. Should a lock-out have failed to occur on either channel, owing to circuit failure or timing errors, the respective LOM input will inhibit the reset signal at gate G and the machine will remain locked-out: in particular if there is a lack of coincidence, between the two channels, of greater than the delay of T4. The power-up/test sequence can be simulated at any time by operating a manual test switch TS.

In normal operating mode, the display gives the stopping time on each occasion and plays no part in the safety of the system, but is useful in that any upward trend in the actual stopping time can be noted so that preventive maintenance can be carried out before production is affected.

The stop command signals are generally taken from final control elements of the machine, i.e. the last electrically-operated control elements in a chain of command controlling the machine movement.

- 8 -

CLAIMS

1.      A motion sensor for sensing movement of a
moving part, comprising an electrically conductive
element moving with the moving part and having its
surface in sliding contact with at least one brush,
means for applying an electrical potential to said brush
and signal processing means responsive to variations
in the consequential current flow, which variations
depend upon variations in the speed of movement of the
conductive element.

2.      A motion sensor as claimed in claim 1, in
which said signal processing means includes means
providing a signal varying with the speed of movement
of said electrically conductive element relative to
said brush(es).

3.      A motion sensor as claimed in claim 2, in
which said signal processing means comprises means
connected to said brush and providing pulses in
accordance with said consequential current flow, said
speed-varying signal being generated from these pulses.

4.      A motion sensor as claimed in claim 3, in
which said pulse-providing means includes a threshold
detector providing said pulses in response only to
received input pulses above its threshold setting.

5.      A motion sensor as claimed in claim 4,
including an amplifier which feeds said threshold
detector, which amplifier has an adjustable gain for
varing the effective threshold setting of said threshold
detector.

6.      A motion sensor as claimed in any one of claims 2 to 5, in which said signal processing means further includes an output stage receiving said speed-varying signal and providing an output signal according to whether the speed of movement is above or below a predetermined value.

7.      A motion sensor as claimed in any preceding claim, in which said electrically conductive element executes rotary movement and has a cylindrical surface in sliding contact with said brush(es).

8.      A stopping performance monitor, comprising a motion sensor as claimed in any preceding claim together with a circuit for receiving a stop-command signal and an output signal from said motion sensor and arranged to monitor the time period (or to measure and display the time period), starting from the stop-command signal, before the motion sensor detects that the speed of movement (of its electrically conductive element relative to said brush) has fallen to below a predetermined value.

9.      A stopping performance monitor as claimed in claim 8, comprising two said motion sensors and in which said circuit comprises two independent channels each with a motion-sensing input, a stop-command signal input and a lock-out output, which outputs of the two channels are cross-monitored.

10.      A stopping performance monitor arranged so as on power-up to adopt a mode wherein a lock-out is automatically initiated, and further arranged that if then reset manually it will adopt a normal operating mode.

FIG.1

FIG.2

**EUROPEAN SEARCH REPORT**

**0137673**
. Application number

## DOCUMENTS CONSIDERED TO BE RELEVANT

EP 84305732.4

| Category | Citation of document with indication. where appropriate, of relevant passages | Relevant to claim | CLASSIFICATION OF THE APPLICATION (Int Cl 4) |
|---|---|---|---|
| A | <u>CH - A5 - 613 525</u> (HASLER AG)<br>* Abstract; fig. 2 *<br><br>-- | 1 | G 01 D 5/12<br>G 01 P 13/00 |
| A | <u>DD - A - 160 244</u> (SCHULTZE)<br>* Fig. 1 *<br><br>-- | 1 | |
| A | <u>DE - A1 - 2 613 862</u> (XAMAX)<br>* Claim 1 *<br><br>-- | 1 | |
| A | <u>DE - A1 - 3 047 777</u> (RHEIN-GE-<br>TRIEBE)<br>* Claim 1 *<br><br>---- | | |
| | | | **TECHNICAL FIELDS SEARCHED (Int. Cl.4)** |
| | | | G 01 D 5/00<br>G 01 P 13/00 |

The present search report has been drawn up for all claims

| Place of search | Date of completion of the search | Examiner |
|---|---|---|
| VIENNA | 30-11-1984 | KUNZE |